# EUROPEAN PATENT SPECIFICATION

(11) **EP 4 562 273 B1**
(45) Date of publication and mention of the grant of the patent: **22.07.2026**
(21) Application number: 23748246.8
(22) Date of filing: 25.07.2023
(51) Int. Cl.: E21B 41/00, F16K 37/00, F16K 31/53

(54) **SUBSEA ACTUATION SUB-SYSTEM**
UNTERSEEISCHES BETÄTIGUNGSSUBSYSTEM
SOUS-SYSTÈME D'ACTIONNEMENT SOUS-MARIN

(30) Priority: 26.07.2022 NO 20220826
(43) Date of publication of application: 04.06.2025
(73) Proprietor: TechnipFMC Norge AS, 3601 Kongsberg (NO)
(72) Inventor: BRAUTI, Espen, 3601 Kongsberg (NO); MATHISEN, Stig, 3601 Kongsberg (NO); BHAT, Deviprasad, 3610 Kongsberg (NO); MAGNUS, Heyn H., 3610 Kongsberg (NO)
(74) Representative: Murgitroyd & Company
(86) International application number: PCT/EP2023/070522
(87) International publication number: WO 2024/023057

(56) References cited:
- EP-A1- 3 492 788
- EP-A1- 3 699 467
- US-A1- 2005 173 667
- US-B1- 9 920 842

## Description

### Technical Field

The present disclosure relates to a subsea actuation sub-system comprising a position indicator and a rotation-to-linear mechanism. More particularly, the present disclosure relates to system indicating a valve position subsea, preferably used in the oil and gas industry.

### Background

A subsea actuation system is used for operating a valve on a valve assembly, such as a subsea X-mas tree. An retrievable actuator is used to connect to the subsea actuation system to operate the valve. The subsea actuation system has a position indicator indicating a position of the valve, for example if the valve is open or closed. This position indicator should be visible from a remotely operated vehicle, ROV, operating the retrievable actuator. It is desirable to be able to know reliably and to indicate clearly the position of the valve.

A further problem is that such position indication takes place subsea, possibly at several thousand meters dept. This results in further problems such a high pressures, water current, darkness, presence of water, poor visibility, etc. The position indicator must also comply with regulations and standards in the oil and gas industry.

A further technical problem is that any part of the position indicator and its operation and replacement must function without a possibility to fail, fulfil technical and legal requirements, and be easy to use. It is desirable that any solution is simple, not expensive to produce, and is reliable. It is further a technical problem to avoid cumbersome arrangements that are expensive to manufacture or assemble. US2012/0234410 and EP3492788A1 may be useful for understanding the background.

### Summary of the Invention

It is an object of the present invention to provide a subsea actuation sub-system comprising a position indicator and a rotation-to-linear mechanism. This object can be achieved by the features as defined by the independent claim. Further enhancements are characterized by the dependent claims. The invention is defined by the claims.

According to one embodiment, a subsea actuation sub-system comprises a position indicator and a rotation-to-linear mechanism. The rotation-to-linear mechanism is fixable to a subsea structure comprising a valve with a valve stem, and is connectable to the valve stem of the valve for moving the valve between an open position and a closed position. The rotation-to-linear mechanism comprises a shaft with an end for receiving rotational input from a separate retrievable motor actuator, the end is positioned within a cylindrical bucket. The bucket comprises a cylindrical opening in an axial direction of the bucket and a through opening, in a radial direction, in a side of the bucket. The shaft extends through a bottom of the bucket to the rotation-to-linear mechanism. The position indicator indicates the position of the output movement of the rotation-to-linear mechanism on the valve stem, and the position indicator is arranged to interact with the shaft within the bucket. The position indicator comprises a first gear and a second gear, the two gears converting the rotation of the shaft to a visual position indicator element outside the bucket. The first gear is arranged on the shaft. The second gear comprises an element. The position of the linear movement of the rotation-to-linear mechanism is indicated by the element. The position indicator further comprises a swing pivotably arranged on the bucket, the element extending through a slot in the swing, and the swing comprising an indicator. The position indicator further comprises a guide attached to the bucket. The guide comprises a slit, the swing extending through the slit with the indicator on one side of the slit and the slot on the other side of the slit. Further enhancements are characterized by the dependent claims.

At least one of the above embodiments provides one or more solutions to the problems and disadvantages with the background art. Other technical advantages of the present disclosure will be readily apparent to one skilled in the art from the following description and claims. Various embodiments of the present application obtain only a subset of the advantages set forth. No one advantage is critical to the embodiments. Any claimed embodiment may be technically combined with any other claimed embodiment or embodiments.

### Brief Description of the Drawings

The accompanying drawings illustrate presently exemplary embodiments of the disclosure and serve to explain, by way of example, the principles of the disclosure.
Fig 1 is a diagrammatic illustration of a subsea actuation sub-system according to an exemplary embodiment of the disclosure;
Fig 2 is a diagrammatic illustration of a subsea actuation sub-system according to an exemplary embodiment of the disclosure;
Fig 3 is a diagrammatic illustration of a subsea actuation sub-system according to an exemplary embodiment of the disclosure according to a radial cut through the bucket;
Fig 4 is a diagrammatic illustration of a subsea actuation sub-system according to an exemplary embodiment of the disclosure;
Fig 5 is a diagrammatic illustration of a subsea actuation sub-system according to an exemplary embodiment of the disclosure;
Fig 6 is a diagrammatic illustration of a subsea actuation sub-system according to another exemplary embodiment of the disclosure;
Fig 7 is a diagrammatic illustration of a subsea actuation sub-system according to an exemplary embodiment of the disclosure, with a partial cut-out A over parts of the two cog wheels and bucket;
Fig 8 is a diagrammatic illustration of a subsea actuation sub-system according to an exemplary embodiment of the disclosure;
Fig 9 is a diagrammatic illustration of a subsea actuation sub-system according to an exemplary embodiment of the disclosure; and
Fig 10 is a diagrammatic illustration of a subsea actuation sub-system according to an exemplary embodiment of the disclosure.

### Detailed Description

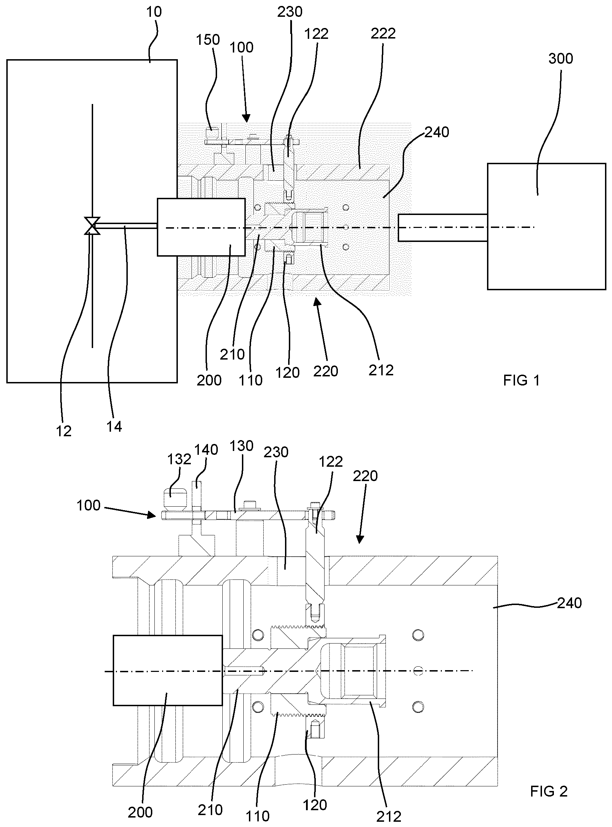

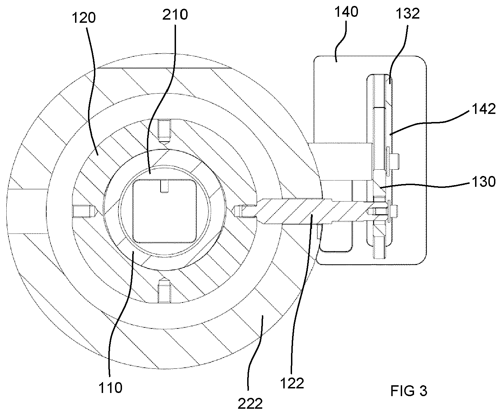

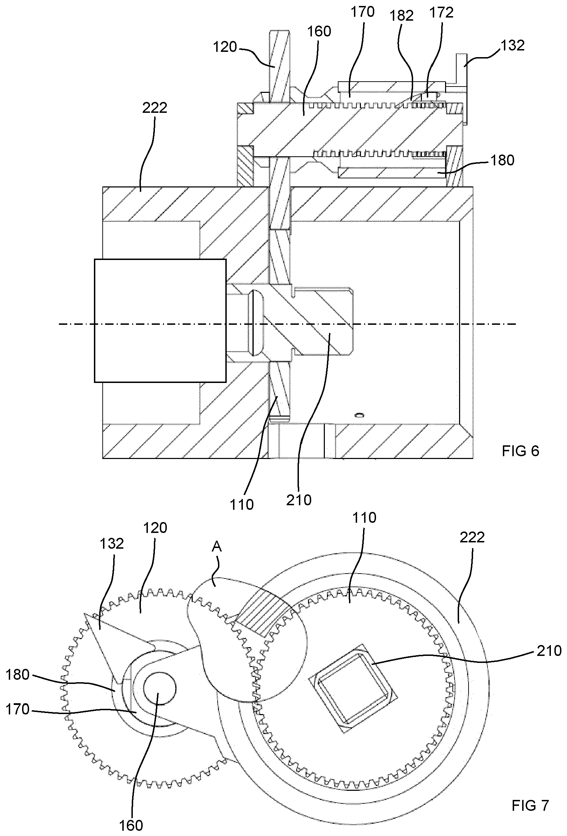

All illustrated embodiments use two gears. Figures 1 to 5 illustrate exemplary embodiments of the subsea actuation sub-system. Figures 1 to 5 illustrates an exemplary embodiment where the two gears comprise a threaded spindle and a saddle nut. Figures 6 to 10 illustrate exemplary embodiments of another embodiment of the subsea actuation sub-system. Figures 6 to 10 illustrates an exemplary embodiment where the two gears comprise two spur gears. Two helical gears may be used instead of the two spur gears.

All embodiments described herein comprise the position indicator 100 arranged in between the separate retrievable motor actuator 300 and the rotation-to-linear mechanism 200. The position indicator 100 measures the rotation of the shaft 210 through threads of the first gear 110 on the shaft 210, and subsequent gears. The position indicator 100 gives an indication on how much the shaft 210 rotates and in turn has moved the valve stem 14 of the valve 12. The position indicator 100 indicates therefore the position of the valve 12, for example if the valve 12 is open, closed, or in a position between.

With reference to Fig 1 there is shown an exemplary embodiment of a subsea actuation sub-system with a position indicator 100 and a rotation-to-linear mechanism 200. The rotation-to-linear mechanism 200 is fixable to a subsea structure 10 comprising a valve 12 with a valve stem 14. The subsea structure 10 may be a subsea X-mas tree or a manifold or the like. The valve 12 may be a master valve, a wing valve, a swab valve, a choke valve, a gate valve, or the like. The valve stem 14 may be a rising valve stem 14. The rotation-to-linear mechanism 200 is connectable to the valve stem 14 of the valve 12 for moving the valve 12 between an open position and a closed position. The rotation-to-linear mechanism 200 comprises a shaft 210 with an end 212 for receiving rotational input from a separate retrievable motor actuator 300. The end 212 is positioned within a cylindrical bucket 220. The bucket 220 comprises a cylindrical opening 240 in an axial direction of the bucket 220 and a through opening 230, in a radial direction, in a side 222 of the bucket 220. The through opening 230 may be an elongate through opening 230. The through opening 230 goes through the side 222 of the bucket 220. The shaft 210 extends through a bottom of the bucket 220 to the rotation-to-linear mechanism 200. The bottom of the bucket 220 is opposite the cylindrical opening 240. The shaft 210, or the shaft 210 and the rotation-to-linear mechanism 200, extends through a bottom of the bucket 220 to connect to and operate the valve stem 14.

The position indicator 100 indicates the position of the output movement of the rotation-to-linear mechanism 200 on the valve stem 14. The position indicator 100 is arranged to interact with the shaft 210 within the bucket 220.

The position indicator 100 comprises a first gear 110 and a second gear 120, the two gears converting the rotation of the shaft 210 to a visual position indicator element 150 outside the bucket 220. The first gear 110 is arranged on, connectable to, the shaft 210. The second gear 120 comprises an element 122. The position of the linear movement of the rotation-to-linear mechanism 200 is indicated by the element 122. That is, the rotational movement that is converted into a linear movement by the rotation-to-linear mechanism 200 operates the valve 12 via the valve stem 14. That rotation is indicated by the element 122, and therefore the position of the valve 12 is indicated. The indication may be a closed valve 12, or and open valve 12, or any position there between of the valve 12.

With reference to Fig 1 there is shown an exemplary embodiment of a subsea actuation sub-system where the element 122 extends through the elongate opening 230. This allows the position of the valve 12 to be indicated on the outside of the bucket 220. The position indicator 100 converts rotational movement into linear movement and indicates the position of the valve 12. The position of the valve 12 relates to the linear movement, the position, of the valve stem 14 caused by the movement of the rotation-to-linear mechanism 200 on the valve stem 14. The rotational movement that is inputted to the rotation-to-linear mechanism 200, by the separate retrievable motor actuator 300, is converted to linear movement operating the valve 12. This linear movement of the valve 12 is indicated by the position indicator 100. The position indicator 100 is arranged to interact with the rotating shaft 210 within the bucket 220, the linear movement indicating amount of rotational movement of the shaft 210. The linear movement is indicated by the element 122 extending through the elongate opening 230. At least a part of the shaft 210 may be inside the bucket 220 arranged so that the separate retrievable motor actuator 300 can access the shaft 210 through the cylindrical opening 230 of the bucket 220.

As may best be taken from figures 1 to 3, the first gear 110 may be a threaded spindle 110 arranged on the shaft 210 and the second gear 120 may be a saddle nut 120 around the threaded spindle 110. The saddle nut 120 may ride on the threaded spindle 110. Rotational movement of the shaft 210 may hereby be translated into liner movement of the saddle nut 120. The element 122 may be connected, arranged on, the saddle nut 120. The element 122, extending through a side wall 222 of the bucket 220, may therefore itself indicate the position of the valve 12. The element 122 may be connected to a further indicator that may indicate the position of the valve 12.

With reference to figures 1 to 3, the first gear 110 and the second gear 120 may be within the bucket 220. The first gear 110 and the second gear 120 may be arranged inside the bucket 220. The threaded spindle 110 and the saddle nut 120 may be arranged inside the bucket 220. The two gears may be inside the bucket 220 converting the rotation of the shaft 210 to a visual position indicator element outside the bucket 220.

According to one embodiment, the subsea actuation sub-system may comprise a spindle drive, the treaded spindle 110 drives the saddle nut 120, and the saddle nut 120 indicates the linear movement of the valve 12. This result in a small opening 230 in the bucket 220. The small movement of the saddle nut 120 may be enlarged by an additional mechanism, such as a swing 129. This allows better positioning indication of the amount of rotation of the shaft 210 of the rotation-to-linear mechanism 200. It is important to keep the radial through opening 230 in the bucket 220 small because of the rotational force, the high moment, transferred by the retrievable motor actuator 300 onto the bucket 220.

With reference to figures 1 to 5, the position indicator 100 may further comprise a swing 130 pivotably arranged on the bucket 220. The element 122 may extend through a slot 134 in the swing 130, and the swing 130 may comprise an indicator 132. The swing 130 may be a plate arranged and rotatably supported on the bucket 220. The swing may at one end have the indicator 132 and opposite hereof have the slot 134. The slot 134 may be semi circular in shape and the slot 134 may go through the swing 130 to allow the element 122 to swing the swing 130 as the element 122 moves in the slot 134. Hereby the small linear movement of the element 122 is translated into a larger visible indicator 132. The indicator 132 indicates thus the position of the valve 12. The visual position indicator element 150 may be the indicator 132.

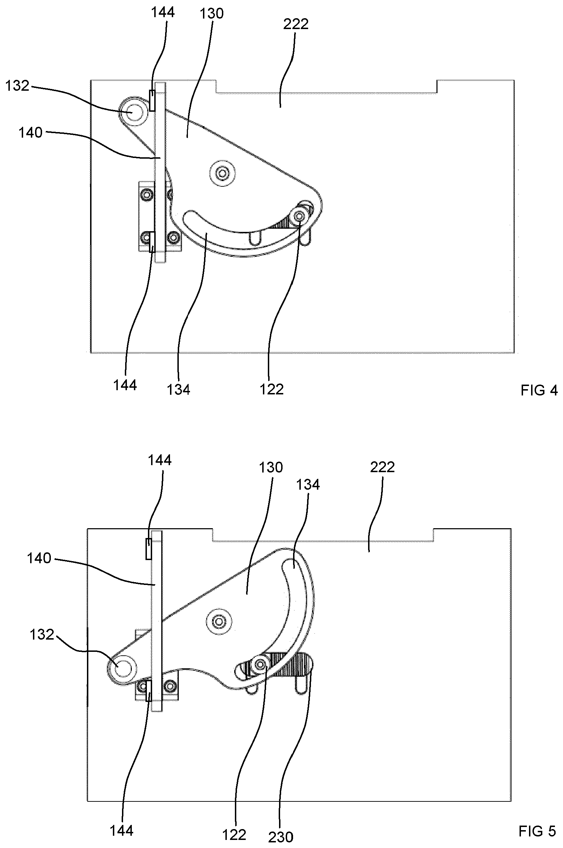

With reference to figures 1 to 5, the position indicator 100 may further comprise a guide 140 attached to the bucket 220. The guide 140 may comprise a slit 142. The swing 130 may extending through the slit 142 with the indicator 132 on one side of the slit 142 and the slot 134 on the other side of the slit 142. The guide 140 may guide the swing 130. Fig 4 shows the indicator 132 in an upper position while Fig 5 shows the indicator 132 in a lower position. These two position would represent open and closed valve 12 positions.

According to one embodiment, the guide 140 may comprise one or more sensors 144 for sensing the presence of the indicator 132. In addition, or as an alternative, the guide 140 may comprise one or more sensors 144 for sensing the presence of the swing 130. In this way the position of the valve may be detected electronically with the one or more sensors 144.

According to one embodiment, the indicator 132 may protrude perpendicular to the swing 130 and may be coloured differently from a colour of the swing 130 or the bucket 220. This allows a good detection of the position of the indicator 132. This makes it easy to see the indicator 132 and hence the position of the valve 12.

According to one embodiment, the guide 140 may be arranged to the bucket 220 and the guide 140 may support the swing 130. The guide 140 may be arranged to be attachable to the bucket 220 and the guide 140 may support the swing 130 so that the swing 130 does not need to be attached to the bucket 220. Only the guide 140 may support the swing 130.

According to one embodiment, the first gear 110 may be arranged connectable to the axis 210, such that the first gear 110 is connectable to, and removable from, the axis 210. In this way the first gear may be replaced if necessary.

According to one embodiment, the element 122 may be attachable to the second gear 120 by a screw connection or by a quick connect coupling. The quick connect coupling may be a snap fitting, for example a flexible element that fits into a groove and locks the element 122 to the second gear 120. In this way the element 122 may be attached to, or detached from, the second gear 120.

With reference to figures 6 to 10, the first gear 110 may be a first spur gear 110 on the shaft 210. The second gear 120 may be a second spur gear 120 meshing with the first spur gear 110. The second gear 120 may take the rotational movement outside the bucket 220. The second gear 120 may rotate, directly or indirectly, the visual position indicator element 132. Preferably the visual position indicator element (132) is a dial. The axis of the second gear 120 may be arranged parallel with the bucket 220, and the axis may be arranged on the outside of the bucket 220. Fig 7 illustrates the two spur gears 110, 120 and shows in a cut out section A how they mesh with each other.

According to one embodiment, the position indicator 100 may further comprises a threaded spindle 160 and a saddle nut 170 around the threaded spindle 160. The threaded spindle 160 may be rotated by the second gear 120 and the saddle nut 170 may be prevented from rotating and may ride linearly along the threaded spindle 160.

According to one embodiment, the position indicator 100 may further comprises a peg 172 arranged on the saddle nut 170. The peg 172 may run in a sleeve opening 182 in a sleeve 180 arranged around the saddle nut 170. The saddle nut 170 and the peg 172 may move linearly, for example parallel to the axis of the bucket 220, while the sleeve 180 may rotate.

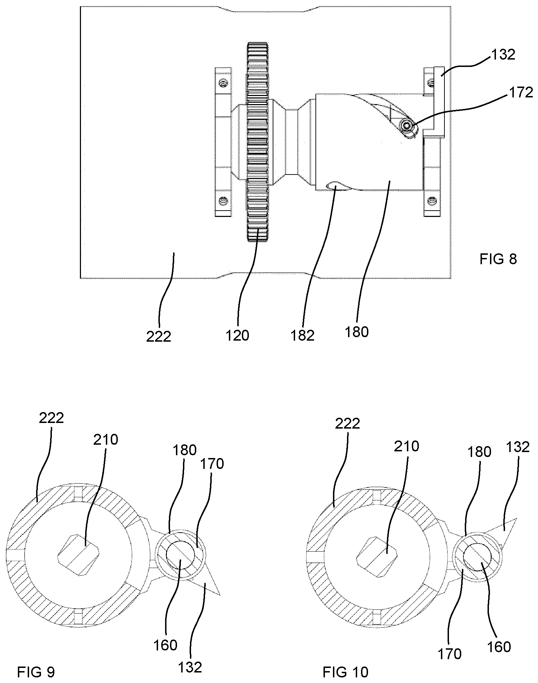

According to one embodiment, the saddle nut 170 may prevented from rotating and the sleeve 180 may rotate as the peg 172 runs in the sleeve opening 174 when the saddle nut 170 moves linearly. The sleeve 180 may comprise the visual position indicator element 132. Preferably the visual position indicator element 132 is a dial. Figures 9 and 10 illustrates parts of the subsea actuation sub-system with a radial cut through the bucket 220 and not showing the two gears 110, 120. Fig 9 shows the indicator 132 in a lower position while Fig 5 shows the indicator 132 in an upper position. These two position would represent open and closed valve 12 positions.

According to one embodiment, the separate retrievable motor actuator 300 may be operated only by electric power. The retrievable actuator 300 may be handled by a ROV and may comprise batteries and an electric rotational motor. The retrievable actuator 300 may be connectable to the valve stem 14 via the shaft 210, and also be connectable to the bucket 220 to counteract the moment transferred to the valve stem 14.

As illustrated in figures 6 to 10, the following alternative embodiments are disclosed. According to a first alternative embodiment, the subsea actuation sub-system according to any one of the embodiments disclosed herein, wherein the first gear 110 is a first spur gear 110 on the shaft 210, the second gear 120 is a second spur gear 120 meshing with the first spur gear 110, the second gear 120 taking the rotational movement outside the bucket 220, the second gear 120 rotating, directly or indirectly, the visual position indicator element 132.

According to a second alternative embodiment, the subsea actuation sub-system according to the first alternative embodiment, wherein the position indicator 100 further comprises a threaded spindle 160 and a saddle nut 170 around the threaded spindle 160.

According to a third alternative embodiment, the subsea actuation sub-system according to the second alternative embodiment, wherein the position indicator 100 further comprises a peg 172 arranged on the saddle nut 170, the peg 172 running in a sleeve opening 182 in a sleeve 180 arranged around the saddle nut 170.

According to a fourth alternative embodiment, the subsea actuation sub-system according to the third alternative embodiment, wherein the saddle nut 170 is prevented from rotating and the sleeve 180 rotates as the peg 172 runs in the sleeve opening 182 when the saddle nut 170 moves linearly, and the sleeve 180 comprises the visual position indicator element 132.

This written description uses examples to disclose the invention, including the best mode, and also to enable any person skilled in the art to practice the invention, including making and using the adapters and performing the methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A subsea actuation sub-system comprising a position indicator (100) and a rotation-to-linear mechanism (200);
the rotation-to-linear mechanism (200) being fixable to a subsea structure (10) comprising a valve (12) with a valve stem (14), and being connectable to the valve stem (14) of the valve (12) for moving the valve (12) between an open position and a closed position, the rotation-to-linear mechanism (200) comprising a shaft (210) with an end (212) for receiving rotational input from a separate retrievable motor actuator (300), the end (212) being positioned within a cylindrical bucket (220), the bucket (220) comprising a cylindrical opening (240) in an axial direction of the bucket (220) and a through opening (230), in a radial direction, in a side (222) of the bucket (220), the shaft (210) extending through a bottom of the bucket to the rotation-to-linear mechanism (200);
the position indicator (100) indicating the position of the output movement of the rotation-to-linear mechanism (200) on the valve stem (14), the position indicator (100) being arranged to interact with the shaft (210) within the bucket (220);
the position indicator (100) comprising a first gear (110) and a second gear (120), the two gears converting the rotation of the shaft (210) to a visual position indicator element (150) outside the bucket (220), the first gear (110) being arranged on the shaft (210), and the second gear (120) comprising an element (122);
wherein the position of the linear movement of the rotation-to-linear mechanism (200) is indicated by the element (122) and wherein the position indicator (100) further comprises a swing (130) pivotably arranged on the bucket (220), the element (122) extending through a slot (224) in the swing (130), and the swing (130) comprising an indicator (132);
wherein the position indicator (100) further comprises a guide (140) attached to the bucket (220), the guide (140) comprises a slit (142), the swing (130) extending through the slit (142) with the indicator (132) on one side of the slit (142) and the slot (224) on the other side of the slit (142).

2. The subsea actuation sub-system according to claim 1, wherein the element (122) extends through the elongate opening (230).

3. The subsea actuation sub-system according to claim 2, wherein the first gear (110) is a threaded spindle (110) arranged on the shaft (210) and the second gear (120) is a saddle nut (120) around the threaded spindle (110).

4. The subsea actuation sub-system according to claim 2 or 3, wherein the first gear (110) and the second gear (120) are within the bucket (220).

5. The subsea actuation sub-system according to claim 1, wherein the guide (140) comprises one or more sensors (144) for sensing the presence of the indicator (132) and/or the swing (130).

6. The subsea actuation sub-system according to claim 1, wherein the indicator (132) protrudes perpendicular to the swing (130) and is coloured differently from a colour of the swing (130).

7. The subsea actuation sub-system according to claim 1, wherein the guide (140) is arranged to the bucket (220) and the guide (140) supports the swing (130).

8. The subsea actuation sub-system according to any one of the preceding claims, wherein the first gear (110) is arranged connectable to the axis (210), such that the first gear (110) is connectable to, and removable from, the axis (210).

9. The subsea actuation sub-system according to any one of the preceding claims, wherein the element (122) is attachable to the second gear (120) by a screw connection or by a quick connect coupling.

## Patentansprüche

1. Ein unterseeisches Betätigungssubsystem, das einen Positionsanzeiger (100) und einen Rotations-zu-Linear-Mechanismus (200) beinhaltet;
wobei der Rotations-zu-Linear-Mechanismus (200) an einer unterseeischen Struktur (10), die ein Ventil (12) mit einem Ventilschaft (14) beinhaltet, fixierbar ist und mit dem Ventilschaft (14) des Ventils (12) verbindbar ist, um das Ventil (12) zwischen einer offenen Position und einer geschlossenen Position zu bewegen, wobei der Rotations-zu-Linear-Mechanismus (200) eine Welle (210) mit einem Ende (212) zum Empfangen einer Rotationseingabe von einem separaten rückholbaren Motoraktor (300) beinhaltet, wobei das Ende (212) innerhalb eines zylindrischen Gehäuses (220) positioniert ist, wobei das Gehäuse (220) eine zylindrische Öffnung (240) in einer axialen Richtung des Gehäuses (220) und eine Durchgangsöffnung (230) in einer radialen Richtung in einer Seite (222) des Gehäuses (220) beinhaltet, wobei sich die Welle (210) durch einen Boden des Gehäuses zu dem Rotations-zu-Linear-Mechanismus (200) erstreckt;
wobei der Positionsanzeiger (100) die Position der Ausgangsbewegung des Rotations-zu-Linear-Mechanismus (200) an dem Ventilschaft (14) anzeigt, wobei der Positionsanzeiger (100) angeordnet ist, um mit der Welle (210) innerhalb des Gehäuses (220) zu interagieren;
wobei der Positionsanzeiger (100) ein erstes Zahnrad (110) und ein zweites Zahnrad (120) beinhaltet, wobei die zwei Zahnräder die Rotation der Welle (210) in ein visuelles Positionsanzeigerelement (150) außerhalb des Gehäuses (220) umwandeln, wobei das erste Zahnrad (110) auf der Welle (210) angeordnet ist und das zweite Zahnrad (120) ein Element (122) beinhaltet;
wobei die Position der linearen Bewegung des Rotations-zu-Linear-Mechanismus (200) durch das Element (122) angezeigt wird und wobei der Positionsanzeiger (100) ferner eine Schwinge (130) beinhaltet, die schwenkbar auf dem Gehäuse (220) angeordnet ist, wobei sich das Element (122) durch eine Aussparung (224) in der Schwinge (130) erstreckt und die Schwinge (130) einen Anzeiger (132) beinhaltet;
wobei der Positionsanzeiger (100) ferner eine Führung (140) beinhaltet, die an dem Gehäuse (220) angebracht ist, wobei die Führung (140) einen Schlitz (142) beinhaltet, wobei sich die Schwinge (130) durch den Schlitz (142) erstreckt, wobei sich der Anzeiger (132) auf einer Seite des Schlitzes (142) und die Aussparung (224) auf der anderen Seite des Schlitzes (142) befindet.

2. Unterseeisches Betätigungssubsystem gemäß Anspruch 1, wobei sich das Element (122) durch die längliche Öffnung (230) erstreckt.

3. Unterseeisches Betätigungssubsystem gemäß Anspruch 2, wobei das erste Zahnrad (110) eine Gewindespindel (110) ist, die auf der Welle (210) angeordnet ist, und das zweite Zahnrad (120) eine Sattelmutter (120) um die Gewindespindel (110) ist.

4. Unterseeisches Betätigungssubsystem gemäß Anspruch 2 oder 3, wobei sich das erste Zahnrad (110) und das zweite Zahnrad (120) innerhalb des Gehäuses (220) befinden.

5. Unterseeisches Betätigungssubsystem gemäß Anspruch 1, wobei die Führung (140) einen oder mehrere Sensoren (144) zum Erfassen des Vorhandenseins des Anzeigers (132) und/oder der Schwinge (130) beinhaltet.

6. Unterseeisches Betätigungssubsystem gemäß Anspruch 1, wobei der Anzeiger (132) senkrecht zu der Schwinge (130) vorsteht und anders gefärbt ist als eine Farbe der Schwinge (130).

7. Unterseeisches Betätigungssubsystem gemäß Anspruch 1, wobei die Führung (140) an dem Gehäuse (220) angeordnet ist und die Führung (140) die Schwinge (130) stützt.

8. Unterseeisches Betätigungssubsystem gemäß einem der vorhergehenden Ansprüche, wobei das erste Zahnrad (110) mit der Achse (210) verbindbar angeordnet ist, sodass das erste Zahnrad (110) mit der Achse (210) verbindbar und von dieser entfernbar ist.

9. Unterseeisches Betätigungssubsystem gemäß einem der vorhergehenden Ansprüche, wobei das Element (122) durch eine Schraubverbindung oder durch eine Schnellverschlusskupplung an dem zweiten Zahnrad (120) anbringbar ist.

## Revendications

1. Un sous-système d'actionnement sous-marin comprenant un indicateur de position (100) et un mécanisme de conversion rotation-linéaire (200) ;
le mécanisme de conversion rotation-linéaire (200) pouvant être fixé à une structure sous-marine (10) comprenant une vanne (12) avec une tige de vanne (14), et pouvant être raccordé à la tige de vanne (14) de la vanne (12) destinée à déplacer la vanne (12) entre une position ouverte et une position fermée, le mécanisme de conversion rotation-linéaire (200) comprenant un arbre (210) avec une extrémité (212) destinée à recevoir une entrée rotative provenant d'un actionneur à moteur récupérable (300) séparé, l'extrémité (212) étant positionnée à l'intérieur d'un fourreau (220) cylindrique, le fourreau (220) comprenant une ouverture cylindrique (240) dans une direction axiale du fourreau (220) et une ouverture traversante (230), dans une direction radiale, dans un côté (222) du fourreau (220), l'arbre (210) s'étendant à travers un fond du fourreau jusqu'au mécanisme de conversion rotation-linéaire (200) ;
l'indicateur de position (100) indiquant la position du mouvement en sortie du mécanisme de conversion rotation-linéaire (200) sur la tige de vanne (14), l'indicateur de position (100) étant agencé pour interagir avec l'arbre (210) à l'intérieur du fourreau (220) ;
l'indicateur de position (100) comprenant un premier organe de transmission (110) et un deuxième organe de transmission (120), les deux organes de transmission convertissant la rotation de l'arbre (210) en un élément indicateur de position visuel (150) à l'extérieur du fourreau (220), le premier organe de transmission (110) étant agencé sur l'arbre (210), et le deuxième organe de transmission (120) comprenant un élément (122) ;
dans lequel la position du mouvement linéaire du mécanisme de conversion rotation-linéaire (200) est indiquée par l'élément (122) et dans lequel l'indicateur de position (100) comprend en outre une bascule (130) agencée de manière à pouvoir pivoter sur le fourreau (220), l'élément (122) s'étendant à travers un évidement (224) dans la bascule (130), et la bascule (130) comprenant un indicateur (132) ;
dans lequel l'indicateur de position (100) comprend en outre un guide (140) attaché au fourreau (220), le guide (140) comprenant une fente (142), la bascule (130) s'étendant à travers la fente (142), l'indicateur (132) étant d'un côté de la fente (142) et l'évidement (224) étant de l'autre côté de la fente (142).

2. Le sous-système d'actionnement sous-marin selon la revendication 1, dans lequel l'élément (122) s'étend à travers l'ouverture allongée (230).

3. Le sous-système d'actionnement sous-marin selon la revendication 2, dans lequel le premier organe de transmission (110) est une broche filetée (110) agencée sur l'arbre (210) et le deuxième organe de transmission (120) est un écrou à bride (120) autour de la broche filetée (110).

4. Le sous-système d'actionnement sous-marin selon la revendication 2 ou la revendication 3, dans lequel le premier organe de transmission (110) et le deuxième organe de transmission (120) sont à l'intérieur du fourreau (220).

5. Le sous-système d'actionnement sous-marin selon la revendication 1, dans lequel le guide (140) comprend un ou plusieurs capteurs (144) destinés à capter la présence de l'indicateur (132) et/ou de la bascule (130).

6. Le sous-système d'actionnement sous-marin selon la revendication 1, dans lequel l'indicateur (132) fait saillie perpendiculairement à la bascule (130) et est coloré d'une couleur différente de celle de la bascule (130).

7. Le sous-système d'actionnement sous-marin selon la revendication 1, dans lequel le guide (140) est agencé sur le fourreau (220) et le guide (140) soutient la bascule (130).

8. Le sous-système d'actionnement sous-marin selon l'une quelconque des revendications précédentes, dans lequel le premier organe de transmission (110) est agencé de manière à pouvoir être raccordé à l'axe (210), de sorte que le premier organe de transmission (110) peut être raccordé à l'axe (210) et retiré de celui-ci.

9. Le sous-système d'actionnement sous-marin selon l'une quelconque des revendications précédentes, dans lequel l'élément (122) peut être attaché au deuxième organe de transmission (120) par un raccordement vissé ou par un accouplement à raccord rapide.
